# EUROPEAN PATENT SPECIFICATION

(11) **EP 0 990 393 B1**
(45) Date of publication and mention of the grant of the patent: **26.03.2003**
(21) Application number: 99118565.3
(22) Date of filing: 20.09.1999
(51) Int. Cl.: A23J 3/34, A23J 1/00, A23L 1/314

(54) **Stick water hydrolyzate and a process for the preparation thereof**
Leimwasserhydrolysat und Verfahren zu dessen Herstellung
Hydrolysat de l'eau de colle et procédé de sa préparation

(30) Priority: 23.09.1998 DK 119798
(43) Date of publication of application: 05.04.2000
(73) Proprietor: Danexport A/S, 9500 Hobro (DK)
(72) Inventor: Simonsen, Per Sjoerup, 8900 Randers (DK)
(74) Representative: Carlsen, Niels G.

(56) References cited:
- WO-A-86/04487
- WO-A-93/09679
- US-A- 3 515 279
- US-A- 4 137 335
- US-A- 4 966 733
- WEBSTER J D ET AL: "Protein hydrolysates from meat industry by-products." MEAT SCIENCE, vol. 7, no. 2, 1982, pages 147-157, XP000874693 Dep. of Applied Biochem. & Food Sci., Univ. of Nottingham School of Agric., Sutton Bonington, Loughborough LE12 5RD, UK
- DATABASE WPI Section Ch, Week 197423 Derwent Publications Ltd., London, GB; Class D23, AN 1974-42334V XP002129562 & JP 48 089207 A (AJINOMOTO KK), 21 November 1973 (1973-11-21)

## Description

The present invention relates to a new hydrolyzate as a powder and a new soup stock product prepared from the liquid phase (the stick water) from industrially conducted fat-rendering plants as well as a process for the preparation thereof.

The hydrolyzate according to the invention is remarkable for being prepared from a byproduct which is usually discharged to an outlet, and in a few instances it is used for petfeed. The product is obtained in industrially conducted fat-rendering plants where steam or hot water is added for melting various fatty products obtained by slaughtering and refinement of pork. The stick water has an approximate composition of 3-8 percent dry matter by weight, including about 2-4 percent protein, 1-3 percent fat, and about 1 percent salt and ash, by weight, and the rest is water, and has the appearance of a white milky liquid.

The hydrolyzate according to the invention is characterized by being prepared by heating the stick water, addition of a proteolytic enzyme, degreasing, and concentration, finished by drying or stabilization as a liquid product by the addition of salt. By the spray-drying, the product is obtained as a fine powder containing 75-90 percent protein, about 0-10 percent salt and ash, 0-10 percent fat, and about 5 percent water, by weight.

In J.D. Webster, D.A. Ledward & R.A. Lawrie: "Protein hydrolysates from meat industry by-products", Meat Science, 7 (2), 147-157 (1982), the preparation of hydrolyzates from bovine lung, bovine rumen and from partially defatted tissue by treatment at 50°C with either pepsin at pH 3.0, papain at pH 5.5, neutrase at pH 7.0, or alcalase at pH 8.5 is disclosed. For all substrates papain was the most effective hydrolyzing agent of those studied whilst neutrase was the least effective. The use of stick water as a substrate for the hydrolysis is not mentioned in the publication.

The published PCT application with the international publication number WO 86/04487 describes a method for preparing a protein hydrolyzate appropiate for human consumption and having a high dry material content from waste and/or slaughter by-products, particularly heads, hocks, and skin of pigs by using proteolytic enzymes. Said method is characterised substantially in that the waste and/or slaughter by-products are pre-cooked in water, the mixture is cooled and brought down to 50-60°C, neutral protease is added to the mixture with a concentration comprised between 0.15 and 0.30%, and in that the mixture is subjected under storing to an enzymatic decomposition. The method enables to obtain a food complement with a relatively high protein content, mainly usable in butchery. Neither this publication mentions the hydrolysis of stick water.

The published PCT application with the international publication number WO 93/09679 discloses a powdery or granular protein product comprising a protein fraction originating from a water-insoluble protein phase resulting from rendering of animal fat tissue, and a protein fraction, resulting from an aqueous proteinaceous phase produced by rendering of animal fat tissue, whereby the amount of protein resulting from the aqueous proteinaceous phase in a given portion of the protein product is higher than the amount present in the aqueous proteinaceous phase produced by rendering the amount of fat tissue resulting in the water-insoluble proteinaceous phase present in the portion in question of the protein product, said powdery or granular protein product having good water-absorbent and emulsifying properties. The product according to this publication is prepared without hydrolysis.

The process according to the invention is characterized in that stick water obtained in industrial fat-rendering plants is heated, a proteolytic enzyme is added, and the resulting mixture is degreased, concentrated, and dried or stabilized as a liquid product by the addition of salt.

As examples of useful proteolytic enzymes can be mentioned Alcalase®, Esperase®, or Protamex®, preferably Alcalase®, which may be purchased from Novo Nordisk. Usually the stick water is heated to 20-100°C, preferably 30-80°C, and in case of Alcalase® in particular to 40-60°C. Preferably, the degreasing of the mixture is carried out by means of a separator. Preferably, the concentration is carried out by means of an evaporator. Preferably, the drying is carried out by spray-drying.

The process of the invention is thus exceptional by being a simple process in which the stick water is heated, e.g. to about 40-60°C, an enzyme, e.g. Alcalase®, prepared by Novo Nordisk, is added in an amount of e.g. 0.5 to 3 percent of the protein content, by weight, and the reaction can run from 1 to 6 hours. Hereafter, the product can be heated to 100°C and thereafter degreased in a separator, concentrated in an evaporator to for example, 30 to 50 percent dry matter, whereafter the product can be spray-dried to a fine powder or stabilized as a liquid product by the addition of salt.

The product according to the invention has a series of advantages which make it useful in a series of widely different products, e.g. snacks, refined meat products, and taste attractants for dog and cat feed.

Because of its absent capability of water binding and gelatinizing, the product according to the invention is suitable for injection and tumbling in various meat products, such as cured saddles of pork, hams, and fore-ends.

The product according to the invention exists as a fine powder or as a soup concentrate of about 55 percent dry matter by weight, of which about 40 percent by weight are protein and about 15 percent by weight are salt. The powder is bright and has a neutral taste. The product in question is biologically stable and no occurence of coli, salmonella or clostridia is demonstrated after 48 hours at 37°C.

The product according to the invention is storage stable and can be stored at room temperature in dry environment for at least 12 months in the unopened package.

### Use of stick water hydrolyzate in different products

This hydrolyzate is used in products where the following advantages are desired:
- Increased total protein content
- Natural meat flavour
- Neutral colour
- 100 percent animal protein

### Example 1

### Use of stick water hydrolyzate in ham products

Stick water hydrolyzate can be used advantageously in injected as well as reformed ham products. Stick water hydrolyzate can be dissolved in the injection brine or added dry (as a powder) by massage.

| Recipe example (injected ham with 25 percent increase) | |
|---|---|
| Ham meat or fore-end | 80.00 percent |
| Water | 16.00 percent |
| Nitrite salt | 1.00 percent |
| Salt | 1.00 percent |
| Sodium phosphate | 0.35 percent |
| Sodium ascorbate | 0.05 percent |
| Stick water hydrolyzate | 1.60 percent |

In a situation without cooking loss the protein to water ratio will be about 1:4.

### Example 2

| Recipe example (reformed ham with 80 percent increase) | |
|---|---|
| Ham meat or fore-end | 66.67 percent |
| Water | 25.43 percent |
| Nitrite salt | 1.00 percent |
| Salt | 1.00 percent |
| Sodium phosphate | 0.35 percent |
| Sodium ascorbate | 0.05 percent |
| Stick water hydrolyzate | 4.00 percent |
| SCANPRO TC 70 | 0.75 percent |

In a situaton without cooking loss the protein to water ratio will be about 1:4.

### Example 3

The stick water hydrolyzate can advantageously be used in emulgated products such as sausages etc.

Here the stick water hydrolyzate will contribute directly with an increase of the animal protein level in the final product. If a rounded, natural taste and a product manufactured without additives is desired, then stick water hydrolyzate will be an obvious candidate.

| Recipe example (emulgated saveloy) | |
|---|---|
| Shoulder of pork | 30.00 percent |
| Pork neck butt | 15.00 percent |
| Lard | 14.00 percent |
| Beef neck meat | 10.00 percent |
| Water | 25.15 percent |
| Salt | 1.00 percent |
| Nitrite salt | 1.00 percent |
| Sodium phosphate | 0.30 percent |
| Sodium ascorbate | 0.05 percent |
| Water | 25.15 percent |
| Salt | 1.00 percent |
| Nitrite salt | 1.00 percent |
| Sodium phosphate | 0.30 percent |
| Sodium ascorbate | 0.05 percent |
| Dextrose | 1.00 percent |
| Stick water hydrolyzate | 2.00 percent |
| Spice | 0.50 percent |

In this recipe the stick water hydrolyzate will contribute directly to a substantial increase of the animal protein level.

## Claims

1. A hydrolyzate prepared from stick water obtained in industrial fat-rendering plants, **characterized by** being prepared by heating the stick water, addition of a proteolytic enzyme, degreasing, and concentration, finished by drying or stabilization as a liquid product by the addition of salt.

2. A hydrolyzate according to claim 1, **characterized in that** the stick water has been heated to 20-100°C, preferably 30-80°C.

3. A hydrolyzate according to claim 1 or 2, **characterized in that** the stick water has been heated to 40-60°C, and that Alcalase® has been used as the proteolytic enzyme.

4. A hydrolyzate according to any of the claims 1 or 3, **characterized in that** the degreasing of the mixture has been carried out by means of a separator.

5. A hydrolyzate according to any of the claims 1 to 4, **characterized in that** the concentration has been carried out by means of an evaporator.

6. A hydrolyzate according to any of the claims 1 to 5, **characterized in that** the drying has been carried out by spray-drying.

7. A process for preparing a stick water hydrolyzate, **characterized in that** stick water obtained in industrial fat-rendering plants is heated, a proteolytic enzyme is added, and the resulting mixture is degreased, concentrated, and dried or stabilized as a liquid product by the addition of salt.

8. A process according to claim 7, **characterized in that** the stick water is heated to 20-100°C, preferably 30-80°C.

9. A process according to claim 7 or 8, **characterized in that** the stick water is heated to 40-60°C, and that Alcalase® is used as the employed proteolytic enzyme is.

10. A process according to any of the claims 7 to 9, **characterized in that** the degreasing of the mixture is carried out by means of a separator.

11. A process according to any of the claims 7 to 10, **characterized in that** the concentration is carried out by means of an evaporator.

12. A process according to any of the claims 7 to 11, **characterized in that** the drying is carried out by spray-drying.

## Patentansprüche

1. Aus Leimwasser hergestelltes Hydrolysat, das in industriellen Fettgewinnungsfabriken anfällt,
**gekennzeichnet durch**
die Herstellung **durch** Erhitzen des Leimwassers, Zugabe eines proteolytischen Enzyms, Entfetten und Konzentrieren, wobei die Fertigstellung **durch** Trocknen oder Stabilisieren als flüssiges Produkt **durch** Zugabe von Salz erfolgt.

2. Hydrolysat nach Anspruch 1,
**dadurch gekennzeichnet, dass**
das Leimwasser auf 20-100°C, vorzugsweise auf 30-80°C erhitzt wurde.

3. Hydrolysat nach Anspruch 1 oder 2,
**dadurch gekennzeichnet, dass**
das Leimwasser auf 40-60°C erhitzt und Alcalase® als proteolytisches Enzym verwendet wurde.

4. Hydrolysat nach einem der Ansprüche 1 oder 3,
**dadurch gekennzeichnet, dass**
das Entfetten der Mischung mit Hilfe eines Separators durchgeführt wurde.

5. Hydrolysat nach einem der Ansprüche 1 bis 4,
**dadurch gekennzeichnet, dass**
das Konzentrieren mit Hilfe eines Verdampfers durchgeführt wurde.

6. Hydrolysat nach einem der Ansprüche 1 bis 5,
**dadurch gekennzeichnet, dass**
das Trocknen durch Sprühtrocknen durchgeführt wurde.

7. Verfahren zur Herstellung eines Leimwasserhydrolysats,
**dadurch gekennzeichnet, dass**
das in industriellen Fettgewinnungsfabriken anfallende Leimwasser erhitzt, ein proteolytisches Enzym zugesetzt und die erhaltene Mischung entfettet, konzentriert und getrocknet oder durch Zugabe von Salz als flüssiges Produkt stabilisiert wird.

8. Verfahren nach Anspruch 7,
**dadurch gekennzeichnet, dass**
das Leimwasser auf 20-100°C, vorzugsweise auf 30-80°C erhitzt wird.

9. Verfahren nach Anspruch 7 oder 8,
**dadurch gekennzeichnet, dass**
das Leimwasser auf 40-60°C erhitzt und Alcalase® als das eingesetzte proteolytische Enzym verwendet wird.

10. Verfahren nach einem der Ansprüche 7 bis 9,
**dadurch gekennzeichnet, dass**
das Entfetten der Mischung mit Hilfe eines Separators durchgeführt wird.

11. Verfahren nach einem der Ansprüche 7 bis 10,
**dadurch gekennzeichnet, dass**
das Konzentrieren mit Hilfe eines Verdampfers durchgeführt wird.

12. Verfahren nach einem der Ansprüche 7 bis 11,
**dadurch gekennzeichnet, dass**
das Trocknen durch Sprühtrocknen durchgeführt wird.

## Revendications

1. Hydrolysat préparé à partir d'eau de colle obtenue dans des usines industrielles de fonte de graisse, **caractérisé en ce qu'**il est préparé par chauffage de l'eau de colle, addition d'une enzyme protéolytique, dégraissage, et concentration, terminé par séchage ou stabilisation sous forme d'un produit liquide par l'addition de sel.

2. Hydrolysat selon la revendication 1, **caractérisé en ce que** l'eau de colle a été traitée à 20-100°C, de préférence à 30-80°C.

3. Hydrolysat selon la revendication 1 ou 2, **caractérisé en ce que** l'eau de colle a été chauffée à 40-60°C, et que de l'Alcalase® a été utilisée comme enzyme protéolytique.

4. Hydrolysat selon l'une quelconque des revendications 1 à 3, **caractérisé en ce que** le dégraissage du mélange a été réalisé au moyen d'un séparateur.

5. Hydrolysat selon l'une quelconque des revendications 1 à 4, **caractérisé en ce que** la concentration a été réalisée au moyen d'un évaporateur.

6. Hydrolysat selon l'une quelconque des revendications 1 à 5, **caractérisé en ce que** le séchage a été réalisé par séchage par pulvérisation.

7. Procédé pour la préparation d'un hydrolysat d'eau de colle, **caractérisé en ce que** l'eau de colle obtenue dans des usines industrielles de fonte de graisse est chauffée, qu'on ajoute une enzyme protéolytique, et que le mélange résultant est dégraissé, concentré, et séché ou stabilisé sous la forme d'un produit liquide par l'addition de sel.

8. Procédé selon la revendication 7, **caractérisé en ce que** l'eau de colle est chauffée à 20-100°C, de préférence à 30-80°C.

9. Procédé selon la revendication 7 ou 8, **caractérisé en ce que** l'eau de colle est chauffée à 40-60°C, et que de l'Alcalase® est utilisée comme l'enzyme protéolytique employée.

10. Procédé selon l'une quelconque des revendications 7 à 9, **caractérisé en ce que** le dégraissage du mélange est réalisé au moyen d'un séparateur.

11. Procédé selon l'une quelconque des revendications 7 à 10, **caractérisé en ce que** la concentration est réalisée au moyen d'un évaporateur.

12. Procédé selon l'une quelconque de revendications 7 à 11, **caractérisé en ce que** le séchage est réalisé par séchage par pulvérisation.
